# EUROPÄISCHE PATENTANMELDUNG

(11) **EP 2 902 604 A1**
(43) Veröffentlichungstag der Anmeldung: **05.08.2015**
(21) Anmeldenummer: 14000389.8
(22) Anmeldetag: 04.02.2014
(51) Int. Cl.: F02C 6/16, F02C 1/02, F02C 7/143, F03D 9/02

(54) **Verfahren und Einrichtung zum Speichern von Energie**

(71) Anmelder: Linde Aktiengesellschaft, 80331 München (DE)
(72) Erfinder: Ferstl, Johann, 80995 München (DE); Windmeier, Christoph, 82538 Geretsried (DE); Lückerath, Philipp, 80801 München (DE)
(74) Vertreter: Fischer, Werner

(57) **Zusammenfassung**

Die Erfindung betrifft ein Verfahren zum Speichern von Energie, bei dem Luft (L) verdichtet (100, 101) wird, die verdichtete Luft (L) in einem Druckspreicher (30) eingespeichert wird, die verdichtete Luft (L) aus dem Druckluftspeicher (30) ausgespeichert wird, und die ausgespeicherte Luft (L) unter Abgabe von elektrischer/mechanischer Leistung expandiert (200) wird. Erfindungsgemäß ist vorgesehen, dass der Luft (L) vor dem Verdichten (101) Wärme entzogen wird und die der Luft (L) entzogene Wärme zumindest teilweise der Luft (L) nach dem Expandieren (200) wieder zugeführt wird. Weiterhin betrifft die Erfindung eine entsprechende Einrichtung (1).

## Beschreibung

Die Erfindung betrifft ein Verfahren zum Speichern von Energie bzw. Umwandeln von Energie gemäß Anspruch 1 sowie eine entsprechende Einrichtung gemäß Anspruch 10.

Die Speicherung von elektrischer Energie in Form von Druckluft (CAES - Compressed Air Energy Storage) benötigt drei grundlegende Komponenten: eine Verdichtungseinheit, einen Druckluftspeicher und eine Expansioneinheit. Je nach technischer Umsetzung des Systems spricht man von (quasi) isothermer, diathermer oder adiabater Prozessführung. Als Druckluftspeicher werden bevorzugt Kavernen genutzt.

Eine gänzlich isotherme Kompression und Expansion sind praktisch nicht zu erreichen. Die quasiisotherme Prozessführung besitzt einen Speicherwirkungsgrad, der kleiner als 50% ausfällt.

Um das Auftreten von kalten Temperaturen während der Expansion zu vermeiden, wird der Druckluft vor der Expansion im diathermen Fall Wärme, in der Regel in Form von Verbrennungswärme aus Erdgas, zugeführt. Bezogen auf die in Form von Strom und Brennstoff zugeführte Exergie wird praktisch ein exergetischer Wirkungsgrad unterhalb von 65% erreicht. Aufgrund der Zufuhr von Brennstoff kann die diatherme CAES als Kombination aus Energiespeicher und Wärmekraftprozess angesehen werden. Es handelt sich daher nicht um einen reinen Energiespeicher.

Im Fall einer adiabaten CAES (A-CAES) handelt es sich um einen reinen Energiespeicher. Abwärme der Kompression wird dabei in einem Wärmespeicher zwischengelagert und dann während der Expansion zugeführt. Mit Verdichteraustrittstemperaturen um z.B. 600°C wären Speicherwirkungsgrade um ca. 65% erreichbar. Praktisch scheitert das Konzept jedoch an der Verfügbarkeit von Apparaten und Maschinen für eine adiabate Verdichtung mit derart hohen Austrittstemperaturen sowie an der Erfordernis gestaffelter Wärmespeicher (z.B. Salzschmelze und Thermoöl) bzw. Regeneratoren unter extremen Drücken. Bei Umsetzung nach dem heutigen Stand der Technik bei geringeren Temperaturen ist mit einem Speicherwirkungsgrad im Bereich von 50-60% zu rechnen.

Isotherme CAES ist z.B. aus der US2010326062A1 bekannt, bei der der direkte Kontakt zwischen der Prozessluft und einem Kühlmittel in einem Kolbenverdichter vorgeschlagen wird. Weiterhin beschreibt die WO2012122004A2 einen diathermen Speicher mit einer Gasturbine, wobei insbesondere auf die örtliche Trennung von Verdichtung, Speicherung und Expansion wertgelegt wird. Um weiterhin die Eintrittstemperatur des Expanders eines adiabaten Speichers zu regulieren, wird in der WO2011159586A2 ein Bypass vor dem Expander in Erwägung gezogen.

Da es sich bei der diathermen CAES um die Kombination aus Energiespeicher und fossiler Feuerung handelt, besitzt dieses Verfahren kaum eine Möglichkeit, als umweltverträglicher Energiespeicher wahrgenommen zu werden. Auch ist immer die Verfügbarkeit eines geeigneten Brennstoffs am Standort erforderlich. Dies führt auch zu erhöhten Betriebskosten. Die adiabate CAES verspricht hohe Speicherwirkungsgrade. Jedoch gibt es keine Apparate und Maschinen, die den extremen Bedingungen während der adiabaten Kompression auf Dauer standhalten.

Hiervorn ausgehend liegt der vorliegenden Erfindung daher die Aufgabe zugrunde, ein Verfahren und eine Einrichtung bzw. Druckluftspeichersystem der eingangs genannten so zu gestalten, dass es einen Wirkungsgrad aufweist, der vergleichbar mit dem Wirkungsgrad der adiabaten und diathermen CAES ist, ohne die Zufuhr externer Energiequellen, insbesondere Brennstoffen, auskommt, und mit vergleichsweise kostengünstigen und verfügbaren Komponenten arbeiten kann.

Dieses Problem wird durch ein Verfahren mit den Merkmalen des Anspruchs 1 gelöst. Vorteilhafte Ausgestaltungen der Erfindung sind in den entsprechenden Unteransprüchen angegeben bzw. werden nachfolgend beschrieben.

Gemäß Anspruch 1 ist vorgesehen, dass der Luft vor bzw. während des Verdichtens Wärme entzogen wird und solchermaßen der Luft entzogene Wärme der Luft nach bzw. während des Expandierens wieder zugeführt wird.

Es handelt sich mit anderen Worten um einen adiabaten Druckluftspeicher bei welchem der Ort der Zu- und Abfuhr der Wärme auf die jeweils andere Seite der Maschinen verlegt wurde, mit der zugrundeliegenden Idee, die Kälte, die bei der arbeitsleistenden Expansion der Druckluft entsteht, insbesondere in einem geeigneten Zwischenmedium zu speichern und dieses dann während der Kompressionsphase zur Kühlung der zu komprimierenden Luft zu nutzen.

Bevorzugt ist vorgesehen, dass jene der Luft stromauf der jeweiligen Verdichterstufe bzw. zwischen je zwei Verdichterstufen entzogene Wärme (insbesondere indirekt oder direkt) zumindet teilweise, d.h., z.B. bis auf etwaigen Wärmeeinfall aus der Umgebung (Kälteverluste), auf ein Zwischenmedium übertragen wird. Das Zwischenmedium wird dabei bevorzugt aus einem ersten Speicherbereich einer Speichereinheit abgezogen, wobei insbesondere das so erwärmte Zwischenmedium in einem zweiten Speicherbereich der Speichereinheit gepeichert wird. Wärme des erwärmten Zwischenmediums, das bevorzugt im Falle des Auspeicherns der Luft aus dem Druckluftspeicher aus dem zweiten Speicherbereich abgezogen wird, wird auf die Luft nach dem Expandieren in der jeweiligen Expanderstufe insbesondere indirekt oder direkt mittels des Zwischenmediums übertragen, um das Zwischenmedium für die Vor- bzw. Zwischenkühlung der zu verdichtenden Luft wieder abzukühlen. Das abgekühlte Zwischenmedium wird bevorzugt in dem ersten Speicherbereich gespeichert, so dass es beim Einspeichern der Luft zum Kühlen der zu verdichtenden Luft bzw. der Verdichterstufen zur Verfügung steht.

Bei den beiden Speicherbereichen der Speichereinheit kann es sich um separate Speicher/Tanks für das wärmere bzw. kältere Zwischenmedium handeln. Als Speichereinheit kann auch ein gemeinsamer Tank oder Speicher mit einer mechanischen Trennschicht verwendet werden, der die beiden Speicherbereiche voneinander abtrennt, so dass sich kaltes und warmes Zwischenmedium nicht vermischen können. Weiterhin kann jedoch als Speichereinheit auch ein die Speicherbereiche aufweisender Schichtspeicher ohne Trennschicht verwendet werden. Die Speicherbereiche bzw. Tanks sind vorzugweise thermisch isoliert, insbesondere an den kalten Leitungsverbindungen zum ersten Speicherbereich, um einem Wärmeeinfall aus der Umgebung entgegen zu wirken.

Als Zwischenmedium wird bevorzugt ein fluides, insbesondere flüssiges Medium verwendet, wie z. B.:
- ein Gemisch aus Wasser und einem Mehrfachalkohol (z.B. Ethylenglykol, Diethylenglykol, Triethylenglykol, Glycerol),
- ein Gemisch aus Wasser und einem Salz (z.B. NaCl, CaCl₂, LiBr),
- ein Gemisch aus Wasser und einem Einfachalkohol (z.B. Methanol, Ethanol, Propanole, Butanole),
- ein Flüssiggas (z.B. Propan, Butane, Dimethylether), oder
- höhere Kohlenwasserstoffe (z.B. Pentane, Hexane, Heptane, Oktane)

Besonders bevorzugt wird als Zwischenmedium ein Gemisch aus Wasser und Ethylenglykol (insbesondere in eutektischer Mischung) verwendet oder ein Gemisch aus Wasser und CaCl₂, vorzugsweise mit 70-75 Gewichts-% Wasser wobei der Rest Salz ist.

Gemäß einer bevorzugten Ausführungsform des erfindungsgemäßen Verfahrens wird die zu verdichtende Luft in einer (insbesondere sekundären) Verdichtereinheit in zumindest einer, insbesondere in mehreren hintereinander geschalteten Verdichterstufen verdichtet, wobei insbesondere der Luft jeweils stromauf der jeweiligen Verdichterstufe der Verdichtereinheit Wärme entzogen wird, und zwar insbesondere durch Wärmeübertragung auf das Zwischenmedium, das bevorzugt im entsprechend erwärmten Zustand im zweiten Speicherbereich gespeichert wird, wobei die solchermaßen entzogene Wärme der Luft nach dem Expandieren in der jeweiligen Expanderstufe (siehe unten) mittels des Zwischemediums wieder zugeführt wird, um das Zwischemedium entsprechend wieder abzukühlen.

Weiterhin wird bevorzugt die nach dem Ausspeichern aus dem Druckluftspeicher unter Leistungsabgabe zu expandierende Luft in zumindest einer Expanderstufe, insbesondere in mehreren hintereinander geschalteten Expanderstufen, einer Expandereinheit expandiert. Dabei wird der expandierten Luft bevorzugt jeweils stromab der jeweiligen Expanderstufe bzw. zwischen je zwei Expanderstufen Wärme zugeführt, insbesondere durch Wärmeübertragung vom Zwischenmedium auf die expandierte Luft. Das entsprechend abgekühlte Zwischenmedium wird vorzugsweise im ersten Speicherbereich gespeichert.

Weiterhin kann die Luft vor dem Einspeichern in den Druckluftspeicher stromauf der (sekundären) Verdichtereinheit in einer weiteren (so genannten primären) Verdichtereinheit in zumindest einer Verdichterstufe, insbesondere in mehreren Verdichterstufen, der primären Verdichtereinheit verdichtet werden. In dieser primären Verdichtereinheit kann die zu verdichtende Luft stromab der jeweiligen Verdichterstufe bzw. zwischen je zwei Verdichterstufen der primären Verdichtereinheit gekühlt werden, insbesondere mittels Wärmeübertragung von der Luft auf das Zwischenmedium sowie altenativ oder ergänzend gegen die Umgebung und/oder ein Kühlmedium wie z.B. Kühlwasser. Die Luft stromab zu kühlen ist hier insbesondere notwendig, um das Auskondensieren von z. B. Wasser bei der Abkühlung zu vermeiden.

Bevorzugt ist weiterhin vorgesehen, dass die Luft stromauf der (insbesondere sekundären) Verdichtereinheit in einer ersten Trocknungseinrichtung getrocknet wird, insbesondere mittels eines Molsiebes, wobei insbesondere die Trocknungseinrichtung stromab der primären Verdichtereinheit angeordnet ist.

Weiterhin ist bevorzugt vorgesehen, dass die Luft nach dem Ausspeichern und vor dem Expandieren in einer separaten zweiten Trocknungseinheit, insbesondere mittels eines Molsiebes, oder in der ersten Trocknungseinrichtung getrocknet wird, d.h., die erste Trocknungseinrichtung kann sowohl beim Einspeichern als auch beim Ausspeichern der Luft zum Trocknen der Luft eingesetzt werden, so dass ggf. auf die zweite Trocknungseinrichtung verzichtet werden kann.

Weiterhin wird bevorzugt die Luft nach dem Ausspeichern aus dem Druckluftspeicher und vor dem Expandieren gedrosselt, und zwar insbesondere nach dem besagten Trocknen, um insbesondere einen konstanten Eingangsdruck für die Expandereinheit bzw. die nachfolgende Expanderstufe der Expandereinheit zu gerwährleisten.

Um weiterhin durch Apparate bedingte Kosten abzusenken, kann mit Vorteil die Verdichtereinheit nach dem Ausspeichern der Luft aus dem Druckluftspeicher auch als Expandereinheit gefahren werden, z.B. durch ensprechendes Ändern der Laufrichtung/Rotationsrichtung der Verdichtereinheit bzw. der Verdichterstufen.

Weiterhin wird das erfindungsgemäße Problem durch eine Einrichtung zum Speichern bzw. Umwandeln von Energie mit den Merkmalen des Anspruchs 10 gelöst. Vorteilhafte Ausgestaltungen der erfindungsgemäßen Einrichtung sind in den entsprechenden Unteransprüchen angegeben bzw. werden nachfolgend dargestellt.

Erfindungsgemäß ist die Einrichtung dazu ausgebildet, stromauf der mindestens einen Verdichterstufe der zu verdichtenden Luft Wärme zu entziehen und solchermaßen der Luft entzogene Wärme der expandierten Luft stromab der mindestens einen Expanderstufe zuzuführen.
Bevorzugt sind mehrere Verdichterstufen und/oder Expanderstufen vorgesehen, wobei die Einrichtung dazu ausgebildet ist, bevorzugt stromauf der ersten Verdichterstufe sowie bevorzugt zwischen aufeinander folgenden Verdichterstufen der zu verdichtenden Luft Wärme zu entziehen (sogenannte Vor- bzw. Zwischenkühlung) und die solchermaßen entzogene Wärme bevorzugt stromab der ersten Expanderstufe, bevorzugt zwischen aufeinander folgenden Expanderstufen sowie bevorzugt nach der letzten Expanderstufe der expandierten Luft zuzuführen (sogenannte Nach- bzw. Zwischenerwärmung). Mit anderen Worten ist die Einrichtung dazu ausgebildet, die Entspannungskälte bei der Expansion der Luft zur Kühlung der zu verdichtenden Luft zu verwenden.

In einer Ausgestaltung der Erfindung weist die Einrichtung eine erste Wärmeübertragungseinheit auf, die stromauf der mindestens einen Verdichterstufe angeordnet ist und dazu ausgebildet ist, Wärme aus der zu verdichtenden Luft auf ein Zwischenmedium zu übertragen. Bei mehreren Verdichterstufen kann die erste Wärmeübertragungseinheit mehrere Passagen aufweisen, wobei eine Passage bevorzugt stromauf der ersten Verdichterstufe sowie bevorzugt je eine Passage zwischen aufeinander folgenden Verdichterstufen vorgesehen ist. In den Passagen kann die zu verdichtende Luft auf den unterschiedlichen Druckstufen geführt werden und Wärme auf das ebenfalls in der ersten Wärmeübertragungseinheit geführte Zwischenmedium übertragen.

Bei einer solchen Wärmeübertragungseinheit kann es sich um einen Wärmeübertrager handeln, der z.B. das Zwischenmedium in einem Mantelraum führt, der einen Rohraum (z.B. ein Rohrbündel) umgibt, in dem die Luft geführt wird, wobei in separaten Rohrpassagen die Luft auf den besagten unterschiedlichen Druckstufen geführt wird. Beispielsweise können gewickelte Wärmeübertrager, bei dem die Rohre des Rohrbündels auf ein Kernrohr gewickelt sind, Geradrohrwärmeübertrager sowie insbesondere Wärmeübertrager nach der TEMA-Klassifikation verwendet werden. Weiterhin können auch Plattenwärmeübertrager oder auch Dirkektkontaktapparate verwendet werden, wobei in einem Direktkontaktapparat im Gegensatz zu den vorgenannten Wärmeübertragern keine indirekte Wärmeübertragung zwischen der Luft und dem Zwischenmedium durchgeführt wird, sondern eine direkte Wärmeübertragung durch Kontaktieren der Luft mit dem Zwischenmedium.

Um den Apparateaufwand möglichst gering zu halten, kann die erste Wärmeübertragungseinheit auch stromab der mindestens einen Expanderstufe angeordnet und dazu ausgebildet sein, Wärme aus dem Zwischenmedium auf die expandierte Luft zu übertragen. Die. besagten Passagen sind dann jeweils stromab der jeweiligen Expanderstufe vorgesehen. Eine derartige Verwendung der ersten Wärmeübetragungseinheit kann beispielsweise mittels Ventilen realisiert werden (siehe auch unten), so dass die erste Wärmeübertragungseinheit beim Verdichten bzw. Einspeichern der Luft zum Vor- und Zwischenkühlen der Luft sowie beim Ausspeichern bzw. Expandieren der Luft zum Nach- und Zwischenerwärmen der Luft verwendbar ist. In einer alternativen Ausführungsform ist vorgesehen, dass die Einrichtung eine zweite Wärmeübertragungseinheit aufweist, die stromab der mindestens einen Expanderstufe angeordnet ist und dazu ausgebildet ist, Wärme aus dem Zwischenmedium auf die expandierte Luft zu übertragen. Bei mehreren Expanderstufen kann die zweite Wärmeübertragungseinheit wiederum separate Passagen aufweisen (vgl. oben), die jeweils stromab der jeweiligen Expanderstufe vorgesehen sind und dazu ausgebildet sind, dort jeweils der expandierten Luft auf den unterschiedlichen Druckstufen Wärme des Zwischenmediums zuzuführen und das ebenfalls in der zweiten Wärmeübertragungseinheit geführte Zwischenmedium entsprechend abzukühlen.

Für den Fall, dass die erste Wärmeübertragungseinheit beim Einspeichern als auch beim Ausspeichern der Luft verwendet wird, ist bevorzugt vorgesehen, dass die erste Wärmeübertragungseinheit mit einem ersten Speicherbereich und einem zweiten Speicherbereich einer Speichereinheit in Strömungsverbindung bringbar ist, so dass entweder Zwischenmedium aus dem ersten Speicherbereich über die erste Wärmeübertragungseinheit in den zweiten Speicherbereich führbar ist, wobei das Zwischenmedium in der Wärmeübertragungseinheit gegen die Luft erwärmt wird (beim Einspeichern), oder dass Zwischenmedium aus dem zweiten Speicherbereich über die erste Wärmeübertragungseinheit in den ersten Speicherbereich führbar ist, wobei das Zwischenmedium gegen die Luft abgekühlt wird (beim Ausspeichern).

Für den Fall, dass zwei separate Wärmeübertragungseinheiten verwendet werden, ist bevorzugt vorgesehen, dass die erste Wärmeübertragungseinheit mit dem ersten Speicherbereich und dem zweiten Speicherbereich verbunden oder verbindbar ist, so dass Zwischenmedium aus dem ersten Speicherbereich über die erste Wärmeübertragungseinheit in den zweiten Speicherbereich führbar ist (wobei das Zwischenmedium erwärmt wird, siehe oben), und dass die zweite Wärmeübertragungseinheit mit dem ersten Speicherbereich und dem zweiten Speicherbereich verbunden oder verbindbar ist, so dass Zwischenmedium aus dem zweiten Speicherbereich über die zweite Wärmeübertragungseinheit in den ersten Speicherbereich führbar ist (wobei das Zwischenmedium abgekühlt wird, siehe oben).

Gemäß einer weiteren bevorzugten Ausgestaltung der erfindungsgemäßen Einrichtung ist vorgesehen, dass diese eine stromauf der Verdichtereinheit angeordnete primäre Verdichtereinheit mit zumindest einer oder mehreren hintereinander geschalteten Verdichterstufen aufweist, die zum Verdichten der Luft ausgebildet sind, wobei insbesondere stromab der mindestens einen Verdichterstufe bzw. zwischen je zwei Verdichterstufen der primären Verdichtereinheit eine dritte Wärmeübertragungseinheit vorgesehen ist (bzw. eine zweite Wärmeübertragungseinheit falls die erste Wärmeübertragungseinheit beim Einspeichern und Ausspeichern verwendet wird), die zum Kühlen der Luft mittels des Zwischenmediums ausgebildet ist, wobei jene dritte bzw. zweite Wärmeübertragungseinheit insbesondere mit dem ersten und dem zweiten Speicherbereich verbunden ist, so dass Zwischenmedium aus dem ersten Speicherbereich über jene dritte bzw. zweite Wärmeübertragungseinheit in den zweiten Speicherbereich führbar ist. Als dritte bzw. zweite Wärmeübertragungseinheit können die vorgenannten Wärmeübertrager bzw. Apparate verwendet werden. Zusätzlich oder alternativ kann die Einrichtung dazu ausgebildet sein, stromab der Verdichterstufen der primären Verdichtereinheit die Luft gegen die Umgebung oder ein Kühlmedium (z.B. Wasser) abzukühlen.

Weiterhin weist die erfindungsgemäße Einrichtung stromauf der Verdichtereinheit bevorzugt eine erste Trocknungseinrichtung auf, die insbesondere ein Molsieb zum Trocknen der Luft aufweist, wobei insbesondere die erste Trocknungseinrichtung stromab der primären Verdichtereinheit angeordnet ist.

Gemäß einer weiteren bevorzugten Ausführungsform der erfindungsgemäßen Einrichtung ist vorgesehen, dass die Einrichtung eine separate zweite Trocknungseinheit aufweist, die vorzugsweise ein Molsieb zum Trocknen der ausgespeicherten Luft aufweist, wobei die zweite Trocknungseinheit vorzugsweise stromab des Druckluftspeichers sowie stromauf der Expandereinheit angeordnet ist.

Alternativ kann vorgesehen sein, dass die erste Trocknungseinrichtung auch so konfigurierbar ist, dass sie stromab des Druckluftspeichers anordenbar ist, so dass auch die ausgespeicherte Luft über die erste Trocknungseinrichtung zum Trocknen der Luft führbar ist. Hierdurch kann der apparative Aufwand reduziert werden.

Bevorzugt weist die Einrichtung weiterhin eine Drosselungseinrichtung auf, die zum Drosseln der ausgespeicherten Luft ausgebildet ist, wobei die Drosselungseinrichtung bevorzugt stromab des Druckluftspeichers, insbesondere stromab der zweiten bzw. ersten Trocknungseinrichtung angeordnet ist sowie stromauf der Expandereinheit. Die Drosselungseinrichtung dient dazu, einen definierten, vorzugsweise konstanten Eingangsdruck für die Expandereinheit zu gerwährleisten.

Schließlich ist gemäß einer weiteren Ausführungsform der erfindungsgemäßen Vorrichtung vorgesehen, dass die Expandereinheit durch die Verdichtereinheit gebildet ist. D.h., beim Einspeichern ist die Verdichtereinheit bzw. deren Verdichsterstufen dazu ausgebildet, die Luft wie oben beschrieben zu verdichten, wobei die Verdichtereinheit bzw. die Verdichterstufen des Weiteren dazu ausgebildet sind, beim Ausspeichern so gefahren zu werden, dass sie die Luft wie oben beschrieben expandieren.

Weitere Merkmale und Vorteile der Erfindung sollen bei der nachfolgenden Beschreibung von Ausführungsformen der Erfindung anhand der Figuren erläutert werden.

Es zeigen:
- Fig. 1: ein Blockdiagramm einer erfindungsgemäßen Einrichtung bzw. eines erfindungsgemäßen Verfahrens;
- Fig. 2: eine weitere Ausführungsform einer erfindungsgemäßen Einrichtung bzw. eines erfindungsgemäßen Verfahrens mit zwei Wärmeübetragungseinheiten für das Ein- bzw. Auspeichern der Luft; und
- Fig. 3: eine weitere Ausführungsform einer erfindungsgemäßen Einrichtung bzw. eines erfindungsgemäßen Verfahrens mit einer Wärmeübetragungseinheit für das Ein- und Auspeichern der Luft.

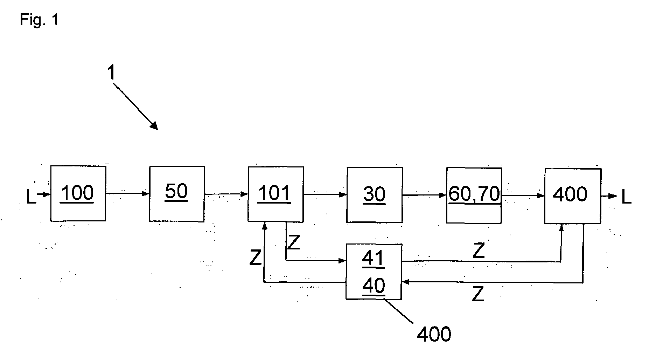

Die der vorliegenden Erfindung zugrunde liegende Idee liegt insbesondere darin, die Kälte, die bei der arbeitsleistenden Entspannung 200 von Druckluft L entsteht, in einem geeigneten Zwischenmedium Z zu speichern 40, 41, 400 und dieses dann während der Verdichtungsphase 101 bzw. 100 zur Kühlung des Verdichters 101 (100) bzw. der verdichteten Luft L zu verwenden. Dieses Prinzip ist in der Figur 1 dargestellt.

Danach ist vorgesehen, dass die in einen Druckluftspeicher 30 (z.B. eine Kaverne) einzuspeichernde Druckluft L in einer primären Verdichtereinheit 100 vorkomprimiert wird, sodann getrocknet 50 wird und anschließend in einer sekundären Verdichtereinheit 101 endkomprimiert wird.

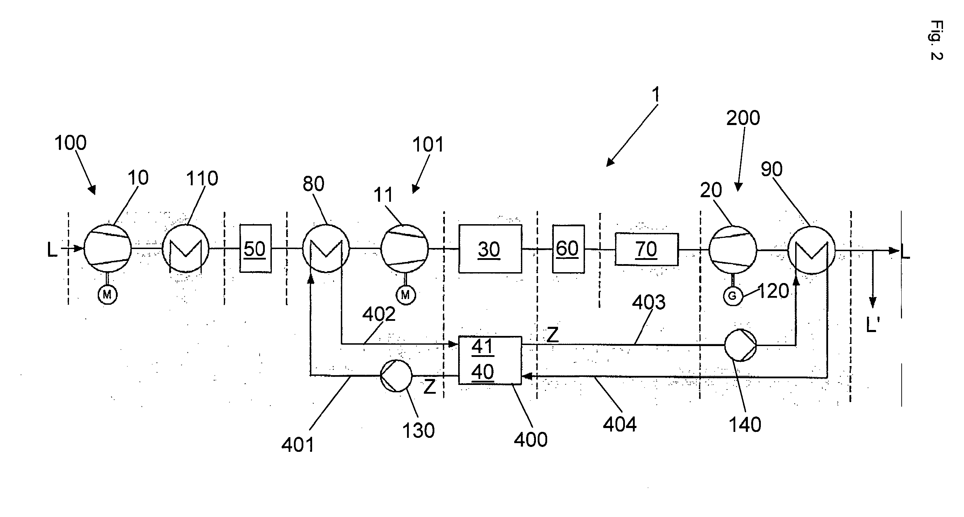

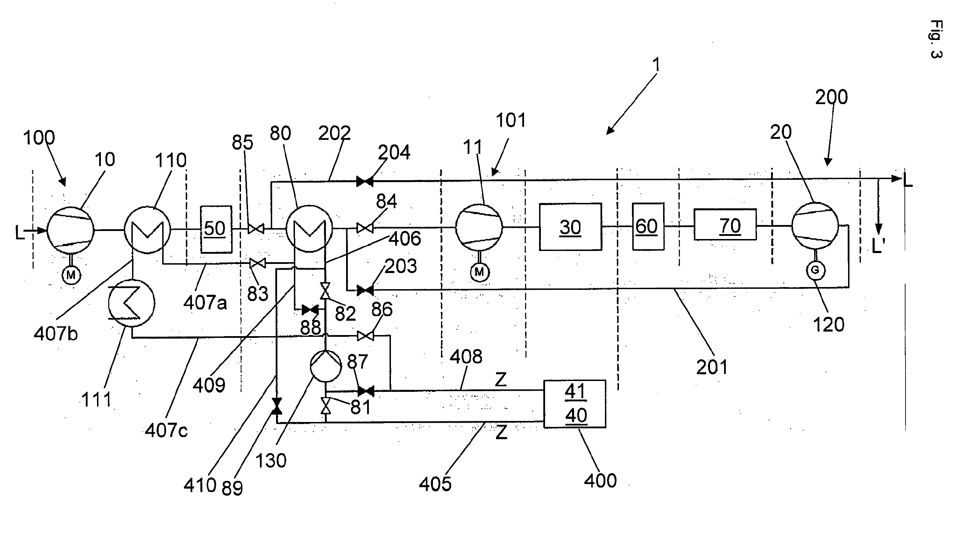

Die beiden Verdichtereinheiten 100, 101 sind vorzugsweise mehrstufig ausgeführt und weisen entsprechend jeweils mehrere Verdichterstufen 10, 11 auf (vgl. Figuren 2 und 3). Die primäre Verdichtereinheit 100 ist dabei bevorzugt dazu ausgebildet, die Luft L so weit zu verdichten, dass ein zur Trockung der Luft L hinreichendes Druckniveau vorliegt. Die primäre Verdichtereinheit 100 kann dabei zur adiabatischen oder quasiisothermen Verdichtung der Luft L ausgebildet sein. Bei einer adiabatischen Verdichtung der Luft L in den primären Verdichterstufen 11 besteht die Möglichkeit der anschließenden Nutzung der Abwärme, wobei dann insbesondere die Verdichtereinheit 100 auch einstufig ausgeführt werden kann, um ein besser nutzbares Temperaturniveau zu erreichen.

Vorzugsweise wird das Druckniveau der Luft L nach der primären Kompression 100 so gewählt, dass eine Trocknung 50 mittels eines Molsiebes 50 oder anderen Trocknungsverfahren 50 möglich ist. Der Taupunkt der Luft L stromab der Trocknung 50 wird dabei vorzugsweise so gewählt, dass kein Wasser in der nachfolgenden sekundären Verdichtereinheit 101 ausfällt. In den Verdichtestufen 10 der primären Verdichtereinheit 100 anfallendes Kondensat wird vorzugsweise ausgeschleust.

Weiterhin wird in der primären Verdichtereinheit 100 vorzugsweise eine Nachkühlung der Luft L am Austritt der jeweiligen Verdichterstufe 10 z.B. gegen die Umgebung oder Kühlwasser vorgenommen und/oder eine Zwischenkühlung mittels des Zwischenmediums Z, und zwar insbesondere durch kaltes Zwischenmedium Z aus einem ersten Speicherbereich 40 einer Speicherheinheit 400 oder durch angewärmtes Zwischenmedium Z (nach Kühlung der sekundären Verdichtereinheit 101). Das kalte Temperaturniveau resultiert aus einer Abkühlung des Zwischenmediums Z durch die Luft L während der arbeitsleistenden Expansion 200 (siehe unten). Das wärmere Temperaturniveau im zweiten Speicherbereich 41 resultiert aus einer Erwärmung des Zwischenmediums Z während des Verdichtens 101 bzw. 100 (siehe unten).

Vorzugsweise wird die Luft L vor den sekundären Verdichterstufen 11 mit Hilfe des Zwischenmediums Z auf typischerweise -20°C bis -80°C, vorzugsweise -40°C bis -50°C gekühlt. Die Temperatur der Luft L wird dabei nach Möglichkeit soweit abgesenkt, dass die Temperatur der Luft L am Austritt der sekundären Verdichtereinheit 101 nahe oberhalb oder unterhalb der Umgebungstemperatur liegt. Dann ist auch nach der letzten Verdichterstufe 11 keine Kühlung vor dem Druckluftspeicher 30 mehr nötig.

Vorzugsweise erfolgt also eine Speicherung der Abwärme aus den primären Verdichterstufen 11 mit demselben Zwischenmedium Z wie zur Kältespeicherung bei der Expansion 200.

Weiterhin wird typischerweise die gleiche Anzahl von mit Zwischenmedium gekühlten Kompressorstufen 10, 11 und Expanderstufen 20 vorgesehen (siehe unten).

Beim Ausspeichern aus dem Druckluftspeicher 30 wird der Luftdruck der Luft L mittels einer Drosselungseinrichtung 70 reduziert, um einen definierten, vorzugsweise konstanten Expandereinheits-Eintrittsdruck zu gewährleisten. Wegen der Expansion in kalte Temperaturen muss ggf. eine teilweise Trocknung 60 vorgesehen werden. Aufgrund der antizyklischen Betriebsweise kann diese Trocknung 60 ebenfalls im Molsieb 50 am Eingang des Prozesses durchgeführt werden.

Die Expansion 200 findet vorzugsweise mehrstufig mit ähnlichen Druckverhältnissen statt, um die Expandereinheit-Austrittstemperaturen annähernd gleich zu halten. Die kalte Luft L am Austritt der jeweiligen Expanderstufe 20 wird bevorzugt gegen das in etwa umgebungswarme Zwischenmedium Z aus dem zweiten Speicherbereich 41 erwärmt. Das nun kalte Zwischenmedium Z wird in dem bevorzugt baulich getrennten ersten Speicherbereich 40 der Speichereinheit 400 zurückgegeben. Ein Teilstrom L' der austretenden Luft L (vgl. Figuren 2 und 3) wird vorzugsweise als Regeneriergas für die Trocknung 50 bzw. 60 verwendet.

Fig. 2 zeigt eine Ausführungsform der erfindungsgemäßen Einrichtung 1 bzw. des erfindungsgemäßen Verfahrens, bei dem bzw. bei der die zu verdichtende und einzuspeichernde Luft L in einer primären Verdichtereinheit 100, die mehrere in Serie angeordnete Verdichterstufen 10 aufweist, die von der Luft L nacheinander durchströmt werden, vorverdichtet wird, wobei stromab der jeweiligen Verdichterstufe 10 eine Nachkühlung der Luft L mittels einer dritten Wärmeübertragungseinheit 110 erfolgt, die vorliegend als Wärmeübertrager zur indirekten Wärmeübertragung ausgebildet ist (andere Wärmetauschmechanismen sind auch denkbar). Hiernach wird die verdichtete Luft L in einer Trocknungseinrichtung 50 (z.B. mittels eines Molsiebes) getrocknet und sodann in einer sekundären Verdichtereinheit 101, die wiederum mehrere in Serie angeordnete Verdicherstufen 11 aufweist, die nacheinander von der Luft L durchströmt werden, wobei die Luft L jeweils verdichtet wird. Dabei wird die Luft L jeweils mittels einer ersten Wärmeübetragungseinheit 80, die vorliegend als erster Wärmeübertrager 80 zur indirekten Wärmeübertragung ausgebildet ist, stromauf der jeweiligen Verdichterstufe 11 gekühlt, indem die Luft L durch eine stromauf der jeweiligen Verdichterstufe 11 bzw. zwischen zwei benachbarten Verdichterstufen 11 vorgesehene Passage des ersten Wärmeübertragers 80 geleitet wird, wobei die Luft L jeweils indirekt Wärme auf das Zwischenmedium Z abgibt, das aus dem ersten Speicherbereich 40 über eine Leitungsverbindung 401 in den ersten Wämeübertrager 80 (z.B. in den Mantelraum des ersten Wärmeübertragers 80) und von dort über eine Leitungsverbindung 402 in den zweiten Speicherbereich 41 mittels einer Pumpe 130 gepumpt wird, wobei das entsprechend erwärmte Zwischenmedium Z in dem zweiten Speicherbereich 41 gespeichert wird.

Die solchermaßen verdichtete Luft L wird in dem Druckluftspeicher 30 eingespeichert und bei Bedarf wieder ausgespeichert. Hierbei wird die verdichtete Luft L über eine zweite Trocknungseinrichtung 60 geleitetet, die stromab des Druckluftspeichers 30 vorgesehen ist, und dort z.B. mittels eines Molsiebes getrocknet. Hiernach wird die getrocknete Luft L in einer stromab der zweiten Trocknungseinheit 60 vorgesehenen Drosselungseinrichtung 70 gedrosselt und in einer stromab der Drosselungseinrichtung 70 vorgesehenen Expandereinheit 200 in mehreren in Serie angeordneten Expanderstufen 20 expandiert, und zwar unter Abgabe von elektrischer Energie mittels Generatoren 120, die durch die Expanderstufen 20 angetrieben werden. Die Luft L durchströmt dabei die Expanderstufen 20 nacheinander, wobei der Luft L Wärme des erwärmten Zwischenmediums Z aus dem zweiten Speicherbereich 41 zugeführt wird, wobei die expandierte Luft L erwärmt wird und das Zwischenmedium Z wieder abgekühlt wird. Das abgekühlte Zwischenmedium Z wird wiederum in dem ersten Speicherbereich 40 gespeichert. Im Einzelnen wird hierbei die Luft L durch Passagen einer zweiten Wärmeübertragungseinheit 90 geleitet, die vorliegend als zweiter Wärmeübertrager 90 zur indirekten Wärmeübertragung ausgebildet ist. Die Passagen sind dabei jeweils stromab der jeweiligen Expanderstufe 20 bzw. zwischen zwei benachbarten Expanderstufen 20 angeordnet, wobei die durch die Passagen geleitete Luft L in den einzelnen Passagen jeweils Wärme aus dem Zwischenmedium Z aufnimmt, das mittels einer Pumpe 140 aus dem zweiten Speicherbereich 41 über eine Leitungsverbindung 403 in den zweiten Wärmeübertrager 90 (insbesondere in dessen Mantelraum) gepumpt wird. Das abgekühlte Zwischenmedium Z wird anschließend aus dem zweiten Wärmeübertrager 90 über eine Leitungsverbindung 404 in den ersten Speicherbereich 40 der Speichereinheit 400 gepumpt und dort gespeichert. Abluft L' aus der Expansion 200 kann zur Regeneration der Trocknungseinrichtungen 50, 60 (z.B. Molsiebe) verwendet werden. Im Hinblick auf die vorteilhafte Minimierung von Investitionen bei Energiespeichersystemen ist es möglich, die Vor-/Zwischenkühlung als auch die Zwischen/Nacherhitzung in der Verdichter- bzw. Expandereinheit 100, 101, 200 in derselben ersten Wärmeübetragungseinheit 80 vorzusehen. Daneben kann der Prozess mit einer umschaltbaren Transferpumpe 130 für das kalte/warme Zwischenmedium Z betrieben werden. Um einen separaten Kühlwasserkreislauf für den primären Verdichter 100 zu sparen, ist es möglich, diesen auch mit dem ewärmten Zwischenmedium Z aus der sekundären Kompression 101 zu kühlen. Diese Varianten sind in der Fig. 3 angedeutet.

Im Einzelnen kann dabei vorgesehen sein, dass der erste Speicherbereich 40 der Speichereinheit 400 über eine erste Leitungsverbindung 405, die ein erstes Ventil 81 aufweist, mit der besagten Pumpe 130 verbunden ist, wobei diese über eine zweite Leitungsverbindung 406, die ein zweites Ventil 82 aufweist, mit einem Einlass der ersten Wärmeübertragungseinrichtung 80 für das Zwischenmedium Z verbunden ist, wobei die erste Wärmeübertragungseinheit 80 wie oben dargestellt ein Wärmeübertrager 80 zur indirekten Wärmeübertragung sein kann. Hierbei wird die Luft L wiederum bevorzugt in Passagen des Rohrraumes und das Zwischenmedium Z im Mantelraum geführt (siehe oben); natürlich können alternativ auch Plattenwärmeübertrager oder sonstige Wärmetauscher verwendet werden.

Ein Auslass des ersten Wärmeübertragers 80 für das Zwischenmedium Z ist des Weiteren über eine dritte Leitungsverbindung 407a, 407b, 407c, die zumindest ein drittes Ventil 83 aufweist, und eine vierte Leitungsverbindung 408, in die die dritte Leitungsverbindung 407c einmündet, mit dem zweiten Speicherbereich 41 verbunden.

Weiterhin ist bevorzugt die erste Wärmeübertragungseinheit 80 über ein viertes Ventil 84 mit der stromab angeordneten (sekundären) Verdichtereinheit 101 und ggf. über ein fünftes Ventil 85 mit einer ggf. stromauf angeordneten primären Verdichtereinheit 100 verbunden, so dass Luft L über jene Ventile 85, 84 durch die Passagen des ersten Wärmeübertragers 80 zur jeweiligen Verdicherstufe 11 der sekundären Verdichtereinheit 101 geleitet werden kann.

Bevorzugt werden die besagten Ventile 81, 82, 83, 84, 85 zum Einspeichern von Luft L in den Druckluftspeicher 30 geöffnet (und die Ventile 87 bis 89 sowie 203, 204 geschlossen, siehe auch unten), so dass zu verdichtetende Luft L über die jeweils stromauf der jeweiligen Verdichterstufe 11 vorgesehene Passage des ersten Wärmeübertragers 80 in die jeweilige Verdichterstufe 11 gelangt und anschließend in den Druckluftspeicher 30. Das im ersten Wärmeübertrager 80 ebenfalls geführte Zwischenmedium Z, das über das geöffnete erste und geöffnete zweite Ventil 81, 82 mittels der Pumpe 130 in die erste Wärmeübertragungseinheit 80 pumpbar ist bzw. gepumpt wird, nimmt dabei zum Kühlen der zu verdichtenden Luft L Wärme auf, wobei weiterhin das erwärmte Zwischenmedium Z von dort über das geöffnete dritte Ventil 83 in den zweiten Speicherbereich 41 pumpbar ist.

Hierbei kann die erste Wärmeübetragungseinheit 80 über das dritte Ventil 83 alternativ mit einer zweiten Wärmeübertragungseinheit 110 verbunden sein, deren luftführende Passagen jeweils stromab einer Verdichterstufe 10 der primären Verdichtereinheit 100 angeordnet sind, wobei diese zweite Wärmeübertragungseinheit 110 wiederum über ein sechstes Ventil 86 der dritten Leitungsverbindung 407c mit dem zweiten Speicherbereich 41 verbunden ist, so dass das Zwischenmedium Z bei geöffnetem dritten und sechsten Ventil 83, 86 über die zweite Wärmeübertragungseinheit 110 in den zweiten Speicherbereich führbar 41 ist, so dass auch die Luft L stromab der jeweiligen Verdichterstufe 10 der primären Verdichtereinheit 100 mittels des Zwischenmediums kühlbar ist. Ggf. kann das Zwischenmedium Z stromab der zweiten Wärmeübertragungseinheit 110 z.B. mittels eines Wärmeübertragers 111 vorgekühlt werden.

Beim Ausspeichern werden die vorgenannten Ventile 81 bis 86 geschlossen und die nachfolgend beschriebenen Ventile 87 bis 89 sowie 203, 204 geöffnet.

Bevorzugt ist diesbezüglich der zweite Speicherbereich 41 über jene vierte Leitungsverbindung 408, die ein siebtes Ventil 87 aufweist, mit der Pumpe 130 verbunden, die wiederum über die zweite Leitungsverbindung 406 und eine davon abzweigende fünfte Leitungsverbindung 409, die ein achtes Ventil 88 aufweist, mit dem Auslass (nun Einlass) der ersten Wärmeübertragungseinrichtung 80 für das Zwischenmedium Z verbunden ist. Das siebte Ventil 87 steht dabei mit einem Leitungsabschnitt in Strömungsverbindung, der das erste Ventil 81 mit der Pumpe 103 verbindet, wobei das achte Ventil 88 mit einer Leitungsverbindung in Strömungsverbindung steht, die die Pumpe 130 mit dem zweiten Ventil 82 verbindet. Weiterhin ist der Einlass (nun Auslass) der ersten Wärmeübertragungseinheit 80 über eine sechste Leitungsverbindung 410, die ein neuntes Ventil 89 aufweist, mit dem ersten Speicherbereich 40 verbunden. Hierbei geht die sechste Leitungsverbindung 410 von der zweiten Leitungsverbindung 406 ab und mündet in die erste Leitungsverbindung 405.

Weiterhin ist bevorzugt die Expandereinheit 200 bzw. deren Expanderstufen 20 über ein zehntes Ventil 203 mit der ersten Wärmeübertragungseinheit 80 verbunden, wobei die erste Wärmeübertragungseinheit 80 weiterhin über ein elftes Ventil 204 mit der Umgebung verbunden ist, um die expandierte und mittels des Zwischenmediums Z erwärmte Luft in die umgebende Atmossphäre abzuströmen.

Bevorzugt werden das siebte bis elfte Ventil 87 bis 204 beim Ausspeichern von Luft L aus dem Druckluftspeicher 30 geöffnet (das erste bis sechste Ventil 81 bis 86 werden geschlossen), so dass expandierte Luft L aus den in Serie geschalteten Expanderstufen 20 über die jeweils stromab vorgesehenen Passagen der ersten Wärmeübertragungseinheit 80 in die Umgebung abgeströmt wird. Hierbei wird das erwärmte Zwischenmedium Z aus dem zweiten Speicherbereich 41 über das geöffnete siebte und geöffnete achte Ventil 87, 88 mittels der Pumpe 130 in die erste Wärmeübertragungseinheit 30 gepumpt, um auf die in den Passagen geführte expandierte Luft jeweils Wärme abzugeben. Das entsprechend abgekühlte Zwischenmedium Z wird von dort über das geöffnete neunte Ventil 89 in den ersten Speicherbereich 40 gepumpt.

Eine weitere Möglichkeit zur Reduktion des apparativen Aufwands besteht darin, die Trocknereinheit 50 (z.B. Molsieb) für die Trocknung vor der Kompression und Expansion gemeinsam zu nutzen sowie die Verdichungseinheit 101 beim Ausspeichern rückwärts als Expandereinheit 200 laufen zu lassen.

Typischerweise wird erfindungsgemäß im Allgemeinen eine zwei- bis dreistufige Verdichtung 100 bis auf Druckniveau zur Trocknung 50 vorgeschlagen.

Bei der Trockung 50 handelt es sich bevorzugt um eine adsorptive Trocknung der Luft L an einer Stelle mit möglichst geringem Druck, der bevorzugt größer oder gleich 4 bara, vorzugsweise größer oder gleich 6bara ist. Der Taupunkt wird dabei so gewählt, dass es gerade nicht zum Ausfrieren von Wasser in den nachfolgenden Stufen kommt.

Weiterhin besteht auch die Möglichkeit, ohne ein Molsieb an der Verdichtungseinheit 101 die Luft L zu Trocknen, und zwar durch Ausfrieren von Wasser in den Zwischen- und Nachkühlern der Verdichtereinheit 101. In diesem Fall kann die primäre Verdichtereinheit 100 entfallen.

Bevorzugt wird das in diesem Fall im Wärmetauscher ausgefrorene Wasser während der Ausspeicherphase durch das warme Zwischenmedium Z geschmolzen und mit der ausgespeicherten Luft L aus dem System ausgetragen.

Die oben beschriebene Vor- bzw. Zwischenkühlung kann auch, wie bereits angedeutet, direkt vorgenommen werden. Hierbei erfolgt die Trocknung/Kühlung der Luft L durch Eindüsen des in diesem Fall vorzugsweise hygroskopischen Zwischenmediums Z in den Luftstrom L. In diesem Fall kann der primäre Verdichter 100 entfallen. Das Zwischenmedium Z kann durch Strippen mit trockener Luft L' während des Ausspeicherns regeniert werden.

Bei Bedarf kann grundsätzlich eine Trocknung 60 des Gases L aus der Kaverne 30 vor Eintritt in die Expandereinheit 200 erfolgen, und zwar vorzugsweise gerade so, dass es nicht zum Auskondensieren oder Ausfrieren am Austritt der Expanderstufen 20 kommt.

Weiterhin kann ein Teilstrom L' der Luft L nach der letzten Expanderstufe 20 zur Regeneration eines oder beider Trocknungseinrichtungen bzw. Molsiebe 50, 60 verwendet werden. Flüssige Trocknungsmittel können ebenfalls mittels eines Teilstroms L' der Luft L nach der letzten Expanderstufe 10 in einer Regenerationseinheit (z.B. Stripperkolonne) regeneriert werden.

Die Expandereinheit 200 weist erfindungsgemäß im Allgemeinen die gleiche oder eine geringere Anzahl von Stufen 20 als die vorhandenen Verdichtungseinheiten 100, 101 auf.

Weiherhin wird bei einer adiabatischen primären Verdichtereinheit 100 sowie bei einer Zwischenspeicherung der Kompressionswärme der primären Verdichtereinheit 100 bevorzugt eine oben bereits angedeutete Vorkühlung des warmen Zwischenmediums Z auf Umgebungstemperatur vor Eintritt in die Expandereinheit 200 über einen Wärmetauscher 111 an die Umgebung, an ein Fernwärmenetz oder an einen Wärmekraftprozess (Stirling, ORC oder TEG (Thermoelektrischen Generator)) vorgenommen.

Die besagte Vorrichtung 70 zur Anpassung des Druckniveaus am Eintritt der Expandereinheit 200 verwendet vorzugsweise ein Drosselorgan oder ein Wirbelrohr. Vorzugsweise ist eine Vorrichtung zur Regelung des Druckanpassungsorgans 70 vorgesehen.

Vorzugsweise erfolgt weiterhin eine Anwärmung der Luft L auf Umgebungstemperatur vor Eintritt in die Expandereinheit 200. Des Weiteren erfolgt bevorzugt eine Nutzung der Kälte, die durch die Vorexpansion vor dem Eintritt in die Expandereinheit 200 entsteht, um zusätzliches Zwischenmedium Z zu kühlen.

Bei der oben beschriebenen mehrstufigen Expansion in der Expandereinheit 200 erfolgt bevorzugt eine Nach- bzw. Zwischenerwärmung der expandierten Luft L mittels eines bevorzugt umgebungswarmen Zwischenmediums Z, wobei das Zwischemedium Z bevorzugt in einem Temperaturbereich von -30°C bis 50°C liegt, vorzugsweise in einem Bereich von -10°C bis 30°C.

**Bezugszeichen**

| | |
|---|---|
| 1 | Einrichtung |
| 10, 11 | Verdichterstufe |
| 20 | Expanderstufe |
| 30 | Druckluftspeicher |
| 40 | Erster Speicherbereich |
| 41 | Zweiter Speicherbereich |
| 50 | Erste Trocknungseinrichtung |
| 60 | Zweite Trocknungseinrichtung |
| 70 | Drosselungseinrichtung |
| 80 | Erste Wärmeübertragungseinheit |
| 81 - 89 | Ventile |
| 90 | Zweite Wärmeübertragungseinheit |
| 100 | Primäre Verdichtungseinheit |
| 101 | Sekundäre Verdichtungseinheit |
| 110 | Zweite bzw. dritte Wärmeübertragungseinheit |
| 111 | Dritte Wärmeübertragungseinheit |
| 120 | Generator |
| 130, 140 | Pumpe |
| 200 | Expandereinheit |
| 201, 202 | Leitungsverbindung |
| 203, 204 | Ventile |
| 401 - 404 | Leitungsverbindungen |
| 405 - 410 | Leitungsverbindungen |
| L | Luft |
| L' | Luft zum Regenerieren der Trocknungseinrichtungen bzw. Molsiebe |
| Z | Zwischenmedium |

## Patentansprüche

1. Verfahren zum Speichern von Energie, bei dem
- Luft (L) in zumindest einer Verdichterstufe (11) verdichtet wird,
- die verdichtete Luft (L) in einem Druckspreicher (30) eingespeichert wird,
- die verdichtete Luft (L) aus dem Druckluftspeicher (30) ausgespeichert wird, und
- die ausgespeicherte Luft (L) unter Abgabe von elektrischer oder mechanischer Leistung in zumindest einer Expanderstufe (20) expandiert wird,
**dadurch gekennzeichnet,**
**dass** der Luft (L) stromauf der Verdichterstufe (11) Wärme entzogen wird und die der Luft (L) entzogene Wärme zumindest teilweise der Luft (L) stromab der mindestens einen Expanderstufe (20) wieder zugeführt wird.

2. Verfahren nach Anspuch 1, **dadurch gekennzeichnet, dass** jene der Luft (L) entzogene Wärme auf ein Zwischenmedium (Z) übertragen wird, das insbesondere aus einem ersten Speicherbereich (40) abgezogen wird, wobei insbesondere das so erwärmte Zwischenmedium (Z) in einem zweiten Speicherbereich (41) gepeichert wird, und wobei Wärme des erwärmten Zwischenmediums (Z), das insbesondere aus dem zweiten Speicherbereich (41) abgezogen wird, auf die Luft (L) stromab der mindestens einen Expanderstufe (20) mittels des Zwischenmediums (Z) übertragen wird, wobei das Zwischenmedium (Z) abgekühlt wird, und wobei insbesondere das abgekühlte Zwischenmedium (Z) in dem ersten Speicherbereich (40) gespeichert wird.

3. Vefahren nach Anspruch 1 oder 2, **dadurch gekennzeichnet, dass** die zu verdichtende Luft (L) in mehreren, hintereinander geschalteten Verdichterstufen (11) verdichtet wird, wobei insbesondere der Luft (L) jeweils stromauf der jeweiligen Verdichterstufe (11) Wärme entzogen wird, insbesondere durch Wärmeübertragung auf das Zwischenmedium (Z).

4. Verfahren nach einem der vorhergehenden Ansprüche, **dadurch gekennzeichnet, dass** die zu expandierende Luft (L) in mehreren, hintereinander geschalteten Expanderstufen (20) expandiert wird, wobei insbesondere der expandierten Luft (L) jeweils stromab der jeweiligen Expanderstufe (20) Wärme zugeführt wird, die zuvor der Luft (L) stromauf der Verdichterstufen (11) entzogen wurde, insbesondere durch Wärmeübertragung vom Zwischenmedium (Z) auf die expandierte Luft (L).

5. Verfahren nach einem der Ansprüche 3 bis 4, **dadurch gekennzeichnet, dass** die Luft (L) stromauf der Verdichtereinheit (101) in einer primären Verdichtereinheit (100) in zumindest einer Verdichterstufe (10), insbesondere in mehreren Verdichterstufen, der primären Verdichtereinheit (100) verdichtet wird, wobei insbesondere die Luft (L) stromab der jeweiligen Verdichterstufe (10) der primären Verdichtereinheit (100) gekühlt wird, insbesondere mittels des Zwischenmediums (Z), gegen die Umgebung und/oder gegen ein zusätzliches Kühlmedium, insbesondere Kühlwasser.

6. Verfahren nach einem der vorhergehenden Ansprüche, **dadurch gekennzeichnet, dass** die Luft (L) stromauf der Verdichtereinheit (101) in einer ersten Trocknungseinrichtung (50) getrocknet wird, insbesondere mittels eines Molsiebes, wobei insbesondere die erste Trocknungseinrichtung (50) stromab der primären Verdichtereinheit (100) angeordnet ist.

7. Verfahren nach einem der vorhergehenden Ansprüche, **dadurch gekennzeichnet, dass** die Luft (L) nach dem Ausspeichern (30) und vor dem Expandieren (200) in einer separaten zweiten Trocknungseinheit (60), insbesondere mittels eines Molsiebes, oder in der ersten Trocknungseinrichtung (50) getrocknet wird.

8. Verfahren nach einem der vorhergehenden Ansprüche, **dadurch gekennzeichnet, dass** der Druck der Luft (L) nach dem Ausspeichern (30) und vor dem Expandieren (200) auf ein definiertes Niveau reduziert (70) wird, insbesondere nach dem Trocknen in der ersten oder zweiten Trocknungseinheit (50, 60).

9. Verfahren nach einem der vorhergehenden Ansprüche, **dadurch gekennzeichnet, dass** die Verdichtereinheit (101) nach dem Ausspeichern (30) der Luft (L) als Expandereinheit (200) zum Expandieren der Luft (L) verwendet wird.

10. Einrichtung zum Speichern von Energie, mit:
- einer Verdichtereinheit (101) mit zumindest einer Verdichterstufe (11), die zum Verdichten von Luft (L) ausgebildet ist,
- einem mit der Verdichtereinheit (101) verbindbaren Druckluftspeicher (30), der zum Einspeichern der verdichteten Luft (L) ausgebildet ist, und
- einer mit dem Druckluftspeicher (30) verbindbaren Expandereinheit (101; 200) mit zumindest einer Expanderstufe (11; 20), die zum Expandieren von aus dem Druckluftspeicher (30) ausgespeicherter Luft (L) unter Leistungsabgabe in Form von elektrischer oder mechanischer Energie ausgebildet ist,
**dadurch gekennzeichnet,**
**dass** die Einrichtung (1) dazu ausgebildet ist, stromauf der mindestens einen Verdichterstufe (101) der zu verdichtenden Luft (L) Wärme zu entziehen und die der Luft (L) entzogene Wärme zumindest teilweise der expandierten Luft (L) stromab der mindestens einen Expanderstufe (11; 20) zuzuführen.

11. Einrichtung nach Anspruch 10, **dadurch gekennzeichnet, dass** die Einrichtung (1) eine erste Wärmeübertragungseinheit (80) aufweist, die stromauf der mindestens einen Verdichterstufe (101) angeordnet ist und dazu ausgebildet ist, Wärme aus der zu verdichtenden Luft (L) auf ein Zwischenmedium (Z) zu übertragen.

12. Einrichtung nach Anspruch 11, **dadurch gekennzeichnet, dass** die erste Wärmeübertragungseinheit (80) auch stromab der mindestens einen Expanderstufe (20) angeordnet ist und dazu ausgebildet ist, Wärme aus dem Zwischenmedium (Z) auf die expandierte Luft (L) zu übertragen.

13. Einrichtung nach Anspruch 11, **dadurch gekennzeichnet, dass** die Einrichtung (1) eine zweite Wärmeübertragungseinheit (90) aufweist, die stromab der mindestens einen Expanderstufe (20) angeordnet ist und dazu ausgebildet ist, Wärme aus dem Zwischenmedium (Z) auf die expandierte Luft (L) zu übertragen.

14. Einrichtung nach Anspruch 12, **dadurch gekennzeichnet, dass** die erste Wärmeübertragungseinheit (80) mit einem ersten Speicherbereich (40) und einem zweiten Speicherbereich (41) einer Speichereinheit (400) verbindbar ist, so dass entweder Zwischenmedium (Z) aus dem ersten Speicherbereich (40) über die erste Wärmeübertragungseinheit (80) in den zweiten Speicherbereich (41) führbar ist, oder dass Zwischenmedium (Z) aus dem zweiten Speicherbereich (41) über die erste Wärmeübertragungseinheit (80) in den ersten Speicherbereich (40) führtbar ist.

15. Einrichtung nach Anspruch 13, **dadurch gekennzeichnet, dass** die erste Wärmeübertragungseinheit (80) mit einem ersten Speicherbereich (40) und einem zweiten Speicherbereich (41) einer Speichereinheit (400) verbunden oder verbindbar ist, so dass Zwischenmedium (Z) aus dem ersten Speicherbereich (40) über die erste Wärmeübertragungseinheit (80) in den zweiten Speicherbereich (41) führbar ist, und dass die zweite Wärmeübertragungseinheit (90) mit dem ersten Speicherbereich (40) und dem zweiten Speicherbereich (41) verbunden oder verbindbar ist, so dass Zwischenmedium (Z) aus dem zweiten Speicherbereich (41) über die zweite Wärmeübertragungseinheit (90) in den ersten Speicherbereich (40) führbar ist.
